# EUROPÄISCHE PATENTSCHRIFT

(11) **EP 2 734 750 B1**
(45) Veröffentlichungstag und Bekanntmachung des Hinweises auf die Patenterteilung: **22.07.2015**
(21) Anmeldenummer: 12730433.5
(22) Anmeldetag: 14.06.2012
(51) Int. Cl.: F16H 61/14

(54) **VORRICHTUNG ZUM BETÄTIGEN EINER REIBSCHLÜSSIGEN WANDLERÜBERBRÜCKUNGSKUPPLUNG EINES HYDRODYNAMISCHEN DREHMOMENTWANDLERS**
DEVICE FOR ACTUATING A FRICTIONAL CONVERTER LOCK-UP CLUTCH OF A HYDRODYNAMIC TORQUE CONVERTER
DISPOSITIF PERMETTANT D'ACTIONNER UN EMBRAYAGE DE PRISE DIRECTE ENTRAÎNÉ PAR FRICTION D'UN CONVERTISSEUR DE COUPLE HYDRODYNAMIQUE

(30) Priorität: 20.07.2011 DE 102011079495
(43) Veröffentlichungstag der Anmeldung: 28.05.2014
(73) Patentinhaber: ZF Friedrichshafen AG, 88038 Friedrichshafen (DE)
(72) Erfinder: LEGNER, Jürgen, 88048 Friedrichshafen (DE)
(86) Internationale Anmeldenummer: PCT/EP2012/061327
(87) Internationale Veröffentlichungsnummer: WO 2013/010732

(56) Entgegenhaltungen:
- EP-A2- 1 998 082
- DE-A1- 3 710 902
- US-A- 4 448 293
- US-A1- 2010 126 816

## Beschreibung

Die Erfindung betrifft eine Vorrichtung zum Betätigen einer reibschlüssigen Wandlerüberbrückungskupplung eines hydrodynamischen Drehmomentwandlers gemäß der im Oberbegriff des Patentanspruches 1 näher definierten Art. Dokument US 4 448 293 stellt den nächsten Stand der Technik der und offenbart die Präamble des Anspruchs 1.

Eine Vorrichtung zum Betreiben eines hydrodynamischen Drehmomentwandlers und einer damit korrespondierenden Wandlerüberbrückungskupplung einer Getriebeeinrichtung ist aus der DE 10 2006 006 179 A1 bekannt, über die konstruktiv einfach ausgestaltete Dreileitungswandler ohne Beeinträchtigungen des Fahrkomforts betreibbar sind.

Des Weiteren ist aus der DE 10 2006 006 180 A1 eine solche Vorrichtung bekannt, über die sowohl als Zweileitungswandler oder als Dreileitungswandler ausgebildete Anfahreinrichtungen und damit korrespondierende Wandlerüberbrückungskupplungen betreibbar sind und die wenigstens teilweise eine systemgruppenunabhängige standardisierte Baugruppe aufweist.

Kolbenräume von Wandlerüberbrückungskupplungen, die Dreileitungswandlern zugeordnet sind, sind sowohl in geöffnetem Betriebszustand als auch im geschlossenen Betriebszustand der Wandlerüberbrückungskupplung als geschlossene Druckräume mit lediglich einem Anschluss ausgeführt. Deshalb sind diese auch als geschlossene 3-Leiter-Wandlerüberbrückungskupplungen bezeichneten Wandlerüberbrückungskupplungen im Vergleich zu offenen 3-Leiter-Wandlerüberbrückungskupplungen, bei welchen die Kolbenräume der Wandlerüberbrückungskupplungen in geöffneten Betriebszuständen der Wandlerüberbrückungskupplungen jeweils mit einem Wandlerinnenraum des jeweils zugeordneten Drehmomentwandlers verbunden sind, durch einen höheren Dichtaufwand und somit höhere Herstellkosten gekennzeichnet.

In der EP 1 918 082 A2 ist eine Vorrichtung zum Betätigen einer reibschlüssigen und als offene 3-Leiter-Wandlerüberbrückungskupplung ausgeführten Wandlerüberbrückungskupplung eines hydrodynamischen Drehmomentwandlers beschrieben, bei der ein Kolben der Wandlerüberbrückungskupplung mit einem in Schließrichtung der Wandlerüberbrückungskupplung wirkenden Druck eines Wandlerinnenraums und mit einem in Öffnungsrichtung wirkenden Druck eines vom Kolben begrenzten Kolbenraumes beaufschlagbar ist. Der Kolbenraum ist zumindest in geöffnetem Betriebszustand der Wandlerüberbrückungskupplung mit dem Wandlerinnenraum verbunden, womit die Wandlerüberbrückungskupplung als kostengünstige und konstruktiv einfach ausgeführte offene 3-Leiter-Wandlerüberbrückungskupplung ausgeführt ist. Der Wandlerinnenraum ist über eine erste Leitung mit Hydraulikfluid beaufschlagbar. Über eine zweite Leitung ist Hydraulikfluid aus dem Wandlerinnenraum abführbar. Zusätzlich ist der Kolbenraum der Wandlerüberbrückungskupplung mit einem druckführenden Bereich und mit einem im Wesentlichen drucklosen Bereich verbindbar.

Hierfür ist eine Schaltventileinrichtung vorgesehen, über die der Kolbenraum der Wandlerüberbrückungskupplung in einer ersten Schaltstellung direkt mit einer Druckseite einer Hydraulikpumpe koppelbar ist. Der Wandlerinnenraum wird mit einem über ein stromab der Druckseite der Hydraulikpumpe angeordnetes Druckbegrenzungsventil eingestellten Druck beaufschlagt. Stromab eines Rücklaufes des hydrodynamischen Drehmomentwandlers ist in der zweiten Leitung ein weiteres Druckbegrenzungsventil vorgesehen, über das ein Mindestdruck im Wandlerinnenraum des hydrodynamischen Drehmomentwandlers einstellbar ist, um Kavitation im Wandlerinnenraum zu vermeiden.

Das Druckbegrenzungsventil in der zweiten Leitung des hydrodynamischen Drehmomentwandlers ist in der ersten Schaltstellung der den Kolbenraum der Wandlerüberbrückungskupplung mit Druck versorgenden Ventileinrichtung gegen einen drucklosen Bereich der Vorrichtung entlüftet.

In einer zweiten Schaltstellung der Ventileinrichtung ist der Kolbenraum der Wandlerüberbrückungskupplung über die Ventileinrichtung in Richtung des drucklosen Bereiches entlüftet, womit der Druck im Kolbenraum der Wandlerüberbrückungskupplung mit Übergang in die zweite Schaltstellung der Ventileinrichtung schlagartig auf das Druckniveau des drucklosen Bereiches abfällt, der üblicherweise im Wesentlichen gleich Null ist bzw. einem Umgebungsdruck der Vorrichtung entspricht. Gleichzeitig wird das Druckbegrenzungsventil der zweiten Leitung in einer zweiten Schaltstellung der Ventileinrichtung über die Ventileinrichtung mit dem Druck der Druckseite der Hydraulikpumpe als Vorsteuerdruck beaufschlagt.

Damit fällt der Druck im Kolbenraum in der zweiten Schaltstellung der Ventileinrichtung im Wesentlichen sprungartig auf Null ab und die Wandlerüberbrückungskupplung wird aufgrund des im Wandlerinnenraum wirksamen Druckes, der dem arithmetischen Mittel aus dem Zulaufdruck und dem über das Druckbegrenzungsventil eingestellten Ablaufdruck des hydrodynamischen Drehmomentwandlers entspricht, schlagartig in ihren geschlossenen Betriebszustand überführt, zu dem ein vom wirksamen Betätigungsdruck im Wandlerinnenraum abhängiger Drehmomentwert über die Wandlerüberbrückungskupplung führbar ist.

Die Übertragungsfähigkeit der Wandlerüberbrückungskupplung steigt somit ebenfalls sprungartig an, was jedoch einen Fahrkomfort in unerwünschtem Umfang beeinträchtigt. Zusätzlich wird der Wert der Übertragungsfähigkeit der Wandlerüberbrückungskupplung durch Anliegen des Drucks der Druckseite der Hydraulikpumpe am Druckbegrenzungsventil in der zweiten Leitung um einen weiteren Wert schlagartig angehoben, da der in der zweiten Schaltstellung der Schaltventileinrichtung zusätzlich am Druckbegrenzungsventil in der zweiten Leitung anliegende Vorsteuerdruck der Druckseite der Hydraulikpumpe zu einem Anstieg des Wandlergegendrucks stromauf des Druckbegrenzungsventiles in der zweiten Leitung führt, der einen Anstieg des in Schließrichtung am Kolben der Wandlerüberbrückungskupplung anliegenden Drucks im Wandlerinnenraum verursacht.

Der vorliegenden Erfindung liegt daher die Aufgabe zugrunde, eine Vorrichtung zum Betätigen einer reibschlüssigen Wandlerüberbrückungskupplung eines hydrodynamischen Drehmomentwandlers zur Verfügung zu stellen, mittels der eine reibschlüssige Wandlerüberbrückungskupplung in einem einen hohen Fahrkomfort gewährleistenden Umfang betätigbar ist.

Erfindungsgemäß wird diese Aufgabe mit einer Vorrichtung gemäß den Merkmalen des Patentanspruches 1 gelöst.

Bei der erfindungsgemäßen Vorrichtung zum Betätigen einer reibschlüssigen Wandlerüberbrückungskupplung eines hydrodynamischen Drehmomentwandlers ist ein Kolben der Wandlerüberbrückungskupplung mit einem in Schließrichtung der Wandlerüberbrückungskupplung wirkenden Druck eines Wandlerinnenraums und mit einem in Öffnungsrichtung wirkenden Druck eines vom Kolben begrenzten Kolbenraumes beaufschlagbar. Der Kolbenraum ist zumindest in geöffnetem Betriebszustand der Wandlerüberbrückungskupplung mit dem Wandlerinnenraum verbunden, wobei der Wandlerinnenraum über eine erste Leitung mit Hydraulikfluid beaufschlagbar ist und über eine zweite Leitung Hydraulikfluid aus dem Wandlerinnenraum abführbar ist. Zusätzlich ist der Kolbenraum der Wandlerüberbrückungskupplung mit einem druckführenden Bereich und mit einem im Wesentlichen drucklosen Bereich verbindbar.

Dadurch, dass eine Einrichtung vorgesehen ist, über die eine Übertragungsfähigkeit der Wandlerüberbrückungskupplung durch Variieren des Drucks im Kolbenraum modulierbar ist, sind Schaltvorgänge der reibschlüssigen Wandlerüberbrückungskupplung zwischen einem geöffneten Betriebszustand der Wandlerüberbrückungskupplung in Richtung eines geschlossenen Betriebszustandes im Vergleich zu aus dem Stand der Technik bekannten Lösungen mit verbessertem Fahrkomfort durchführbar.

Dabei wird vorliegend unter dem Begriff modulierbare Übertragungsfähigkeit eine zumindest zeitweise stufenlose Veränderung der Übertragungsfähigkeit der Wandlerüberbrückungskupplung ausgehend von einem vollständig geöffneten Betriebszustand der Wandlerüberbrückungskupplung, zu dem über die Wandlerüberbrückungskupplung im Wesentlichen kein Drehmoment führbar ist, in Richtung eines vollständig geschlossenen Betriebszustandes, zu dem ein auslegungsbedingt maximaler Drehmomentwert über die Wandlerüberbrückungskupplung führbar ist, verstanden.

Mit der erfindungsgemäßen Vorrichtung werden im Vergleich zu aus dem Stand der Technik bekannten Lösungen, bei welchen ein Drehmömentaufbau während eines Schließvorganges der Wandlerüberbrückungskupplung nicht beeinflussbar ist, harte Schaltvorgänge der Wandlerüberbrückungskupplung mit hohen dynamischen Drehmomenten vermieden, die mit einer Drehmomentkapazität einer Wandlerüberbrückungskupplung mit einer oder mehreren Reibflächen nicht in gewünschtem Umfang übertragbar sind.

Bei der erfindungsgemäßen Vorrichtung umfasst die Einrichtung eine zwischen dem druckführenden Bereich und dem Kolbenraum der Wandlerüberbrückungskupplung und zwischen dem drucklosen Bereich und dem Kolbenraum angeordnete Schaltventileinrichtung, eine zwischen der Schaltventileinrichtung und dem drucklosen Bereich angeordnete Drosseleinrichtung und einen zwischen der Schaltventileinrichtung und dem Kolbenraum vorgesehenen Druckmittelspeicher, wobei der Kolbenraum bei geschlossener Wandlerüberbrückungskupplung vom Wandlerinnenraum getrennt ist und in der ersten Schaltstellung der Schaltventileinrichtung mit dem druckführenden Bereich sowie in einer zweiten Schaltstellung über die Drosseleinrichtung mit dem drucklosen Bereich verbunden ist.

Bei dieser Ausführung ist in geöffnetem Betriebszustand der Wandlerüberbrückungskupplung der Druck im Kolbenraum über die schaltventileinrichtungsseitige Verbindung des Kolbenraumes mit dem druckführenden Bereich höher einstellbar als im Wandlerinnenraum und die Wandlerüberbrückungskupplung somit auf einfache Art und Weise in geöffnetem Betriebszustand haltbar. Bei Vorliegen einer Anforderung zum Überführen der Wandlerüberbrückungskupplung in ihren geschlossenen Betriebszustand wird die Schaltventileinrichtung von der ersten Schaltstellung in ihre zweite Schaltstellung überführt und der Kolbenraum über die Schaltventileinrichtung und über die Drosseleinrichtung mit dem drucklosen Bereich verbunden, womit der Druck im Kolbenraum in Richtung des drucklosen Bereiches entlüftet wird, dessen Druckniveau im Wesentlichen gleich Null oder auf dem Niveau eines Vorbefülldruckes liegen kann. Gleichzeitig wird der in der ersten Schaltstellung der Schaltventileinrichtung vollständig befüllte Druckmittelspeicher in Richtung des drucklosen Bereiches durch Ausbringen des im Druckmittelspeicher gespeicherten Hydraulikfluides über die Schaltventileinrichtung und die Drosseleinrichtung entladen. Der durch die Entladung des Druckmittelspeichers in Richtung des drucklosen Bereiches im Bereich der Drosseleinrichtung und auch im Bereich des Kolbenraumes anliegende Druck führt zu einem für die Modulation der Übertragungsfähigkeit der Wandlerüberbrückungskupplung erforderlichen langsamen Absenkung des Drucks im Kolbenraum.

Das langsame Absenken des Drucks im Kolbenraum der Wandlerüberbrückungskupplung führt gemeinsam mit dem im Wandlerinnenraum vorliegenden und am Kolben der Wandlerüberbrückungskupplung in Schließrichtung der Wandlerüberbrückungskupplung angreifenden Druck zu einem ebenfalls langsamen Anstieg Übertragungsfähigkeit der Wandlerüberbrückungskupplung, womit eine drehmomentmodulierte Zuschaltung der Wandlerüberbrückungskupplung erreicht wird.

Bei einer kostengünstig herstellbaren und einfach betreibbaren Ausführungsform der erfindungsgemäßen Vorrichtung ist der Druckmittelspeicher als eine Kolben-Zylinder-Einheit ausgebildet, dessen Kolbenelement mit einer Federkraft einer Federeinrichtung entgegen einer an einer Fläche des Kolbenelementes angreifenden Druckkraft beaufschlagt ist, wobei die Druckkraft zu einem im Kolbenraum vorliegenden Druck äquivalent ist.

Ist der Druckmittelspeicher in den Kolbenraum integriert und variiert das Volumen des Druckmittelspeichers in Abhängigkeit einer definierten Elastizität des Kolbens der Wandlerüberbrückungskupplung und eines im Kolbenraum vorliegenden Druckes, ist eine drehmomentmodulierte Zuschaltung der Wandlerüberbrückungskupplung bauraumgünstig und mit geringen Betätigungsaufwand realisierbar.

Bei einer weiteren vorteilhaften Ausführungsform der erfindungsgemäßen Vorrichtung umfasst die Einrichtung eine zwischen dem druckführenden Bereich und dem Kolbenraum und zwischen dem drucklosen Bereich und dem Kolbenraum angeordnete Regelventileinrichtung, wobei der Kolbenraum über die Regelventileinrichtung mit dem druckführenden Bereich und mit dem drucklosen Bereich in Wirkverbindung bringbar ist.

Damit besteht auf einfache Art und Weise die Möglichkeit, den Kolbenraum in geöffnetem Betriebszustand der Wandlerüberbrückungskupplung über die Regelventileinrichtung mit einem geregelt eingestellten Druck zu beaufschlagen, der die Wandlerüberbrückungskupplung in geöffnetem Betriebszustand hält. Zusätzlich besteht auch die Möglichkeit, den Druck im Kolbenraum über die Regelventileinrichtung dadurch geregelt einzustellen, dass der Kolbenraum über die Regelventileinrichtung mit dem drucklosen Bereich in Wirkverbindung bringbar ist. Dabei ist der Druck im Kolbenraum geregelt langsam absenkbar und eine für einen hohen Fahrkomfort erforderliche drehmomentmodulierte Schaltung der Wandlerüberbrückungskupplung realisierbar.

Ist der Kolbenraum bei geschlossener Wandlerüberbrückungskupplung vom Wandlerinnenraum getrennt, ist die Regelventileinrichtung mit negativer Überdeckung auszuführen, um die drehmomentmodulierte Schaltung der Wandlerüberbrückungskupplung vom geöffneten Betriebszustand in den geschlossenen Betriebszustand durchführen zu können und dabei einen hohen Fahrkomfort gewährleisten zu können.

Umfasst die Einrichtung einen Kolbenraum und den Wandlerinnenraum verbindende Drosseleinrichtung, ist die Regelventileinrichtung mit einer positiven Überdeckung ausführbar und die drehmomentmodulierte Schaltung der Wandlerüberbrückungskupplung mit geringeren Leckage-Volumenströmen durchführbar.

Unter einer mit positiver Überdeckung ausgeführten Regelventileinrichtung wird vorliegend eine Ventileinrichtung verstanden, bei der über den Verschiebeweg eines Ventilschiebers zwischen einer ersten Endstellung in Richtung einer zweiten Endstellung ein Totweg zu überwinden ist, während dem alle Anschlüsse der Ventileinrichtung geschlossen sind. Im Gegensatz dazu ist eine Regelventileinrichtung mit negativer Überdeckung derart ausgeführt, dass in einer definierten Schaltstellung eines Ventilschiebers alle Kanäle miteinander verbunden sind. Damit ist der Druck im Kolbenraum der Wandlerüberbrückungskupplung über eine Regelventileinrichtung mit negativer Überdeckung ohne die den Kolbenraum und den Wandlerinnenraum vorgesehene verbindende Drosseleinrichtung in gewünschtem Umfang langsam absenkbar. Hierfür sind der druckführende Bereich und der drucklose Bereich über die mit negativer Überdeckung ausgeführte Regelventileinrichtung gleichzeitig mit dem Kolbenraum zur Drehmomentmodulation der Wandlerüberbrückungskupplung während der Schaltung der Wandlerüberbrückungskupplung im dafür erforderlichen Umfang verbindbar.

Steht der Druck des druckführenden Bereiches in Abhängigkeit eines Folgeventiles bzw. eines Druckbegrenzungsventiles, das stromab einer Druckmittelquelle, vorzugsweise einer Hydraulikpumpe, vorgesehen ist, wird eine Beeinflussung des Druckes stromauf des Folgeventiles bzw. stromab der Druckmittelquelle durch die Beaufschlagung des Kolbenraumes mit Hydraulikfluid ausgehend vom druckführenden Bereich auf einfache Art und Weise vermieden.

Damit ist beispielsweise eine Druckmittelversorgung eines direkt mit der Druckmittelquelle verbundenen Primärdruckkreislaufes eines Hydrauliksystems einer Getriebeeinrichtung, über den eine Betätigung von Schaltelementen, wie Kupplungen und/oder Bremsen erfolgt, die zur Darstellung verschiedener Übersetzungen zu betätigen sind, unabhängig von der Versorgung der Wandlerüberbrückungskupplung.

Bei einer weiteren vorteilhaften Ausführungsform der erfindungsgemäßen Vorrichtung ist stromab des Folgeventils bzw. des Druckbegrenzungsventils ein weiteres Folgeventil bzw. ein weiteres Druckbegrenzungsventil vorgesehen, mittels dem vorzugsweise ein Schmierdruckkreislauf einer Getriebeeinrichtung mit dem druckführenden Bereich oberhalb eines definierten Druckniveaus stromauf des weiteren Folgeventils verbindbar ist. Damit ist der Druck im druckführenden Bereich auf einfache Art und Weise auf ein vordefiniertes und eine Funktionsweise der Wandlerüberbrückungskupplung und auch des hydrodynamischen Drehmomentwandlers nicht beeinträchtigendes Druckniveau begrenzbar und das bei Überschreiten des Druckniveaus im Bereich des weiteren Folgeventils abgespritzte Hydraulikfluidvolumen zur Versorgung eines Schmierdruckkreislaufes verwendbar.

Ist zwischen dem druckführenden Bereich und dem Wandlerinnenraum eine Drosseleinrichtung vorgesehen, ist auf einfache Art und Weise gewährleistet, dass in geöffnetem Betriebszustand der Wandlerüberbrückungskupplung der im Wandlerinnenraum wirkende Druck kleiner ist als der im Kolbenraum der Wandlerüberbrückungskupplung anliegende Druck des druckführenden Bereiches und die Wandlerüberbrückungskupplung sicher in geöffneten Betriebszustand haltbar ist.

Bei einer weiteren vorteilhaften Ausführungsform der erfindungsgemäßen Vorrichtung ist stromab des Wandlerinnenraums in der zweiten Leitung ein zusätzliches Folgeventil vorgesehen, über das oberhalb eines definierten Druckniveaus stromauf des zusätzlichen Folgeventils vorzugsweise eine Kühlereinrichtung mit Hydraulikfluid beaufschlagbar ist. Damit ist im Wandlerinnenraum über das zusätzliche Folgeventil ein definierter Druck einstellbar, über den Kavitation im Drehmomentwandler vermieden werden kann.

Ist der Schmierdruckkreislauf stromab der Kühleinrichtung angeordnet und der druckführende Bereich über das weitere Folgeventil stromab der Kühleinrichtung und stromauf des Schmierdruckkreislaufes mit dem Schmierdruckkreislauf in Wirkverbindung bringbar, ist der Druck im Wandlerinnenraum begrenzbar und gleichzeitig der zur Vermeidung von Kavitation im Drehmomentwandler erforderliche Druckmindestwert im Wandlerinnenraum einstellbar.

Sowohl die in den Patentansprüchen angegebenen Merkmale als auch die in den nachfolgenden Ausführungsbeispielen der erfindungsgemäßen Vorrichtung angegebenen Merkmale sind jeweils für sich allein oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Vorrichtung ergeben sich aus den Patentansprüchen und den nachfolgend unter Bezugnahme auf die Zeichnung prinzipmäßig beschriebenen Ausführungsbeispielen, wobei der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: ein vereinfachtes Schaltschema einer ersten Ausführungsform der erfindungsgemäßen Vorrichtung bei geöffneter Wandlerüberbrückungskupplung;
- Fig. 2: die Vorrichtung gemäß Fig. 1 bei geschlossener Wandlerüberbrückungskupplung;
- Fig. 3: eine Fig. 1 entsprechende Darstellung einer zweiten Ausführungsform der erfindungsgemäßen Vorrichtung bei geöffneter Wandlerüberbrückungskupplung; und

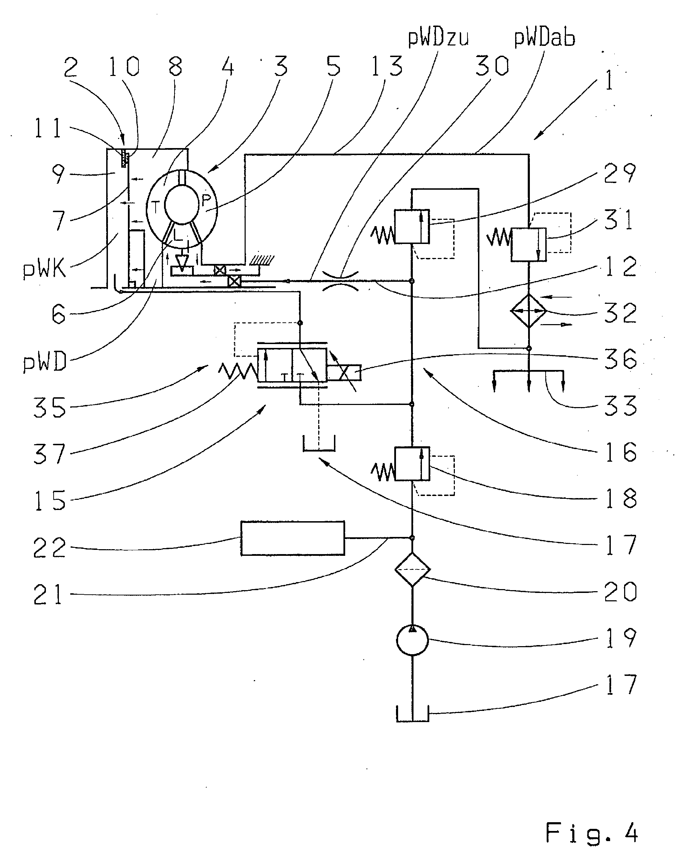

- Fig.4: die Vorrichtung gemäß Fig. 3 bei geschlossener Wandlerüberbrückungskupplung.

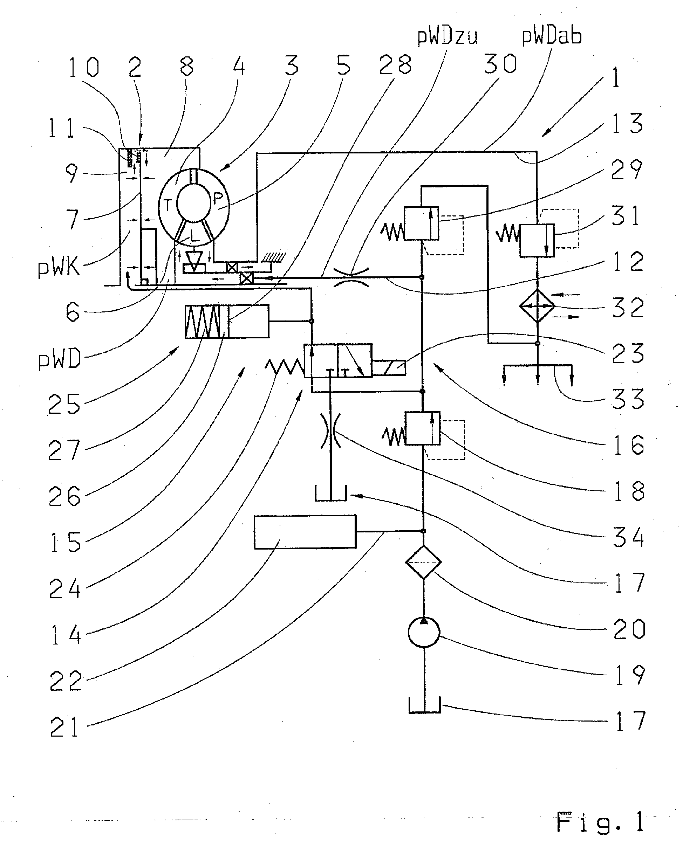

In Fig. 1 ist eine Vorrichtung 1 zum Betätigen einer reibschlüssigen Wandlerüberbrückungskupplung 2 eines hydrodynamischen Drehmomentwandlers 3 gezeigt. Der Drehmomentwandler 3 ist in an sich bekannter Art und Weise mit einem Turbinenrad 4, einem Pumpenrad 5 und einem Leitrad 6 ausgebildet. Des Weiteren ist die Wandlerüberbrückungskupplung 2 mit einem Kolben 7 ausgebildet, der in Bezug auf das Turbinenrad 4 bzw. eines Wandlerinnenraums 8 in axialer Richtung verschiebbar ausgeführt ist. Eine axiale Position des Kolbens 7 stellt sich in Abhängigkeit eines am Kolben 7 angreifenden und in Öffnungsrichtung der Wandlerüberbrückungskupplung 2 wirkenden Drucks pWK in einem vom Kolben 7 begrenzten Kolbenraum 9 und eines im Wandlerinnenraum 8 vorliegenden und in Schließrichtung der Wandlerüberbrückungskupplung 2 am Kolben 7 angreifenden Drucks pWD ein. Dabei entspricht der ausgehend vom Wandlerinnenraum 8 am Kolben 7 angreifende Druck pWD dem arithmetischen Mittel eines Zulaufdruckes pWDzu des hydrodynamischen Drehmomentwandlers 3 und einem Ablaufdruck pWDab des hydrodynamischen Drehmomentwandlers 3.

Bei geschlossener Wandlerüberbrückungskupplung 2 kommt der Kolben 7 mit einem auf seiner dem Turbinenrad abgewandten Seite angeordneten Reibbelag 10 an einem mit dem Pumpenrad 5 fest verbundenen weiteren Reibbelag 11 in Anlage, womit das drehfest mit dem Kolben 7 verbundene Turbinenrad 4 in geschlossenem Betriebszustand der Wandlerüberbrückungskupplung 2 drehfest mit dem Pumpenrad verbunden ist. Im Gegensatz dazu liegt der Kolben 7 bei geöffneter Wandlerüberbrückungskupplung 2 nicht an dem Reibbelag 11 des Pumpenrades 5 an.

Die Reibbeläge 10 und 11 sind vorliegend ohne Nutung ausgeführt, womit der Kolbenraum 9 bei geöffneter Wandlerüberbrückungskupplung 2 im Bereich zwischen den Reibbelägen 10 und 11 mit dem Wandlerinnenraum 8 verbunden ist und bei geschlossener Wandlerüberbrückungskupplung 2 vom Wandlerinnenraum 8 getrennt ist.

Der Wandlerinnenraum 8 ist vorliegend über eine erste Leitung 12 mit Hydraulikfluid und dem Zulaufdruck pWDzu beaufschlagbar. Zusätzlich ist über eine zweite Leitung 13 Hydraulikfluid mit dem Ablaufdruck pWDab aus dem Wandlerinnenraum 8 abführbar. Der Kolbenraum 9 ist vorliegend über eine Schaltventileinrichtung 14 einer Einrichtung 15 mit einem druckführenden Bereich 16 und mit einem im Wesentlichen drucklosen Bereich 17 bzw. einem Tank verbindbar. Der Druck des druckführenden Bereiches 21 steht vorliegend in Abhängigkeit eines Folgeventiles 18 bzw. eines Druckbegrenzungsventiles, das stromab einer vorliegend als Hydraulikpumpe ausgeführten Druckmittelquelle 19 angeordnet ist. Der Hydraulikpumpe 19 ist vorliegend ein Filterelement 20 nachgeschaltet, in dessen Bereich das von der Hydraulikpumpe 19 geförderte Hydraulikfluid gefiltert wird.

Stromab des Filterelementes 20 und stromauf des Druckbegrenzungsventils 18 zweigt eine Leitung 21 ab, über die eine Versorgung eines Primärdruckkreislaufes 22 einer Getriebeeinrichtung eines mit dem ein Anfahrelement darstellenden Drehmomentwandler 3 ausgeführten Fahrzeugantriebsstranges eines Telehändlers, eines Radladers oder dergleichen von der Hydraulikpumpe 19 mit Hochdruck, vorzugsweise 16 bis 20 bar, versorgt wird. Über den Primärdruckkreislauf 22 sind beispielsweise als Kupplungen und/oder Bremsen ausgeführte Schaltelemente der in der Zeichnung nicht näher dargestellten Getriebeeinrichtung zur Darstellung verschiedener Übersetzungen oder Übersetzungsbereiche, innerhalb welchen eine Übersetzung der Getriebeeinrichtung jeweils stufenlos einstellbar ist, mit dem für die Darstellung der Übersetzungen oder der Übersetzungsbereiche erforderlichen Betätigungsdrücke beaufschlagbar sind.

In der in Fig. 1 dargestellten ersten Schaltstellung der Schaltventileinrichtung 14 wird der Druck des druckführenden Bereiches 16 über die Schaltventileinrichtung 14 bzw. das Wandlerkupplungsschaltventil in Richtung des Kolbenraumes 9 der Wandlerüberbrückungskupplung 2 weitergeleitet. Die Schaltventileinrichtung 14 bzw. ein Digitalmagnet 23 ist unbestromt und die Schaltventileinrichtung 14 ist von einer Federeinrichtung 24 in ihrer ersten Schaltstellung gehalten. Zwischen der der vorliegend als 3/2-Wege-Ventil ausgeführten Schaltventileinrichtung 14 und dem Kolbenraum 9 ist ein Druckmittelspeicher 25 der Einrichtung 15 angeordnet, der als Kolben-Zylinder-Einheit ausgebildet ist. Ein Kolbenelement 26 des Druckmittelspeichers 25 ist mit einer Federkraft einer Federkrafteinrichtung 27 entgegen einer an einer Fläche 28 des Kolbenelementes 26 angreifenden Druckkraft beaufschlagt ist, wobei die Druckkraft jeweils zu einem im Kolbenraum 9 vorliegenden Druck äquivalent ist. In der ersten Schaltstellung der Schaltventileinrichtung 14 ist der Druckmittelspeicher 25 aufgrund des an der Fläche 28 des Kolbenelementes 26 anliegenden Drucks des druckführenden Bereiches 16 vollständig befüllt.

Stromab des Druckbegrenzungsventils 18 ist ein weiteres Folgeventil 29 bzw. ein weiteres Druckbegrenzungsventil vorgesehen, über das der Druck des druckführenden Bereichs 16 begrenzt ist. Das weitere Druckbegrenzungsventil 29 stellt ein Wandlersicherheitsventil dar, über welches unzulässig hohe Druckwerte im Wandlerinnenraum 8 auf einfache Art und Weise vermieden werden. Stromauf des weiteren Druckbegrenzungsventils 29 zweigt die erste Leitung 12 in Richtung des Wandlerinnenraums 8 ab, wobei die erste Leitung 12 mit einer Drosseleinrichtung 30 ausgeführt ist, in deren Bereich ein definierter Druckabfall erzeugt wird. Über die Drosseleinrichtung 30 ist gewährleistet, dass der Druck im Wandlerinnenraum 8 bzw. der in Schließrichtung am Kolben 7 angreifende Druck pWD kleiner ist als der in Öffnungsrichtung am Kolben 7 angreifende Druck pWK des Kolbenraumes 9, wenn sich die Schaltventileinrichtung 14 in ihrer in Fig. 1 dargestellten ersten Schaltstellung befindet. Damit wird gewährleistet, dass die Wandlerüberbrückungskupplung 2 in der ersten Schaltstellung der Schaltventileinrichtung 14 sich auf jeden Fall in geöffnetem Betriebszustand befindet.

Die Summe der über den Kolbenraum 9 und über die erste Leitung 12 in den Wandlerinnenraum 8 geführten Hydraulikfluidvolumenströme werden über die zweite Leitung 13 aus dem Wandlerinnenraum 8 in Richtung eines zusätzlichen Folgeventils 31 bzw. eines zusätzlichen Druckbegrenzungsventils geführt, das ein so genanntes Wandlergegendruckventil darstellt. Über das zusätzliche Folgeventil 31 wird sichergestellt, dass ein Druck im Wandlerinnenraum 8 nicht unterhalb eines definierten Druckniveaus abfällt, unterhalb dem im Wandlerinnenraum 8 den Drehmomentwandler 3 schädigende Kavitation auftritt. Zusätzlich werden über das zusätzliche Folgeventil 31 konstante Druckverhältnisse im Wandlerinnenraum erreicht, die eine Betätigung der Wandlerüberbrückungskupplung 2 vereinfachen.

Oberhalb eines definierten Druckniveaus des zusätzlichen Druckbegrenzungsventils 31 öffnet das zusätzliche Druckbegrenzungsventil 31 und das über das zusätzliche Druckbegrenzungsventil 31 strömende Hydraulikfluidvolumen wird durch eine stromab angeordnete Kühlereinrichtung 32 geführt. Wiederum stromab der Kühleinrichtung 32 ist ein Schmierdruckkreislauf 33 der Getriebeeinrichtung vorgesehen. Nimmt der Druck im druckführenden Bereich 16 unzulässig hohe Werte an, öffnet das weitere Druckbegrenzungsventil 29, wobei der über das weitere Druckbegrenzungsventil 29 strömende Hydraulikfluidvolumenstrom stromab der Kühleinrichtung 32 und stromauf des Schmierdruckkreislaufes 33 in Richtung des Schmierdruckkreislaufes 33 geführt wird.

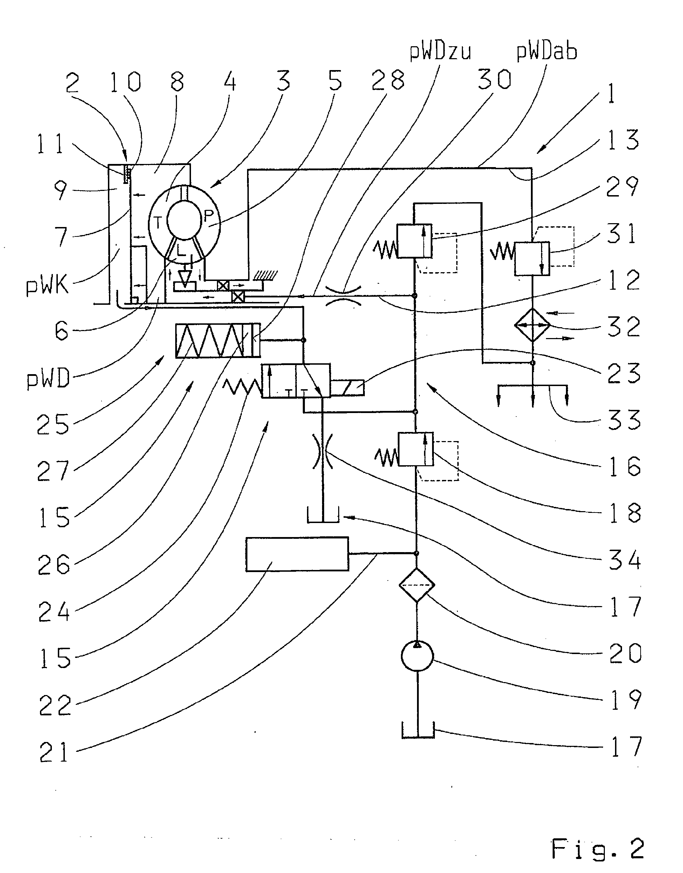

Liegt eine entsprechende Anforderung zum Schließen der Wandlerüberbrückungskupplung 2 vor, wird der Digitalmagnet 23 der Schaltventileinrichtung 14 entsprechend bestromt und die Schaltventileinrichtung 14 entgegen der Federkraft der Federeinrichtung 24 in ihre in Fig. 2 dargestellte zweite Schaltstellung umgeschoben, in der die Verbindung zwischen dem Kolbenraum 9 und dem druckführenden Bereich 16 im Bereich der Schaltventileinrichtung 14 gesperrt ist und der Kolbenraum 9 über die Schaltventileinrichtung 14 mit dem im Wesentlichen drucklosen Bereich 17 über eine Drosseleinrichtung 34 verbunden ist. In diesem Betriebszustand der Vorrichtung 1 wird der Wandlerinnenraum 8 aufgrund des im Kolbenraumes 9 abfallenden Druckes pWK nur noch über die erste Leitung 12 mit Hydraulikfluid ausgehend vom druckführenden Bereich 16 beaufschlagt und gleichzeitig Hydraulikfluid über die zweite Leitung 13 aus dem Wandlerinnenraum 8 abgeführt.

Dies resultiert aus der Tatsache, dass der Druck im Kolbenraum 9 aufgrund der Verbindung des Kolbenraumes 9 mit dem drucklosen Bereich 17 zunächst kurzfristig absinkt und der Kolben 7 vom wirksamen Druck pWD im Wandlerinnenraum 8 gegen den Reibbelag 11 gedrückt wird und der Kolbenraum 9 vom Wandlerinnenraum 8 getrennt ist. Der Kolbenraum 9 wird dann weder vom druckführenden Bereich 16 über die Schaltventileinrichtung 14 noch über den Wandlerinnenraum 8 mit Hydraulikfluid beaufschlagt. Um ein schlagartiges Abfallen des Drucks pWK im Kolbenraum 9 zu verhindern und einen sprungartigen Anstieg der Übertragungsfähigkeit der Wandlerüberbrückungskupplung 2 zu vermeiden, ist die Federkraft der Federeinrichtung 27 des Druckmittelspeichers 25 vorliegend derart ausgelegt, dass der Druckmittelspeicher 25 das gespeicherte Druckmittel bzw. das gespeicherte Hydraulikfluid im Bereich zwischen der Schaltventileinrichtung 14 und dem Kolbenraum 9 in das Leitungssystem einspeist.

Entsprechend der Federkennlinie der Federeinrichtung 27 und der Fläche 28 des Kolbenelementes 26 des einen Modulationsspeicher darstellenden Druckmittelspeichers 25 wird der Druck pWK im Kolbenraum 9 durch die druckmittelspeicherseitige Einspeisung von Hydraulikfluid in Verbindung mit der Drosseleinrichtung 34 langsam abgesenkt. Das im Druckmittelspeicher 25 gespeicherte Hydraulikfluid fließt über die Drosseleinrichtung 34 in Richtung des drucklosen Bereiches 17 ab, weshalb sich im Kolbenraum 9 über der Zeit ein definierter Druckverlauf des Druckes pWK einstellt und das von der Wandlerüberbrückungskupplung übertragbare Drehmoment über der Zeit langsam ansteigt. Damit wird eine drehmomentmodulierte Schaltung der Wandlerüberbrückungskupplung 2 in gewünschtem Umfang erreicht.

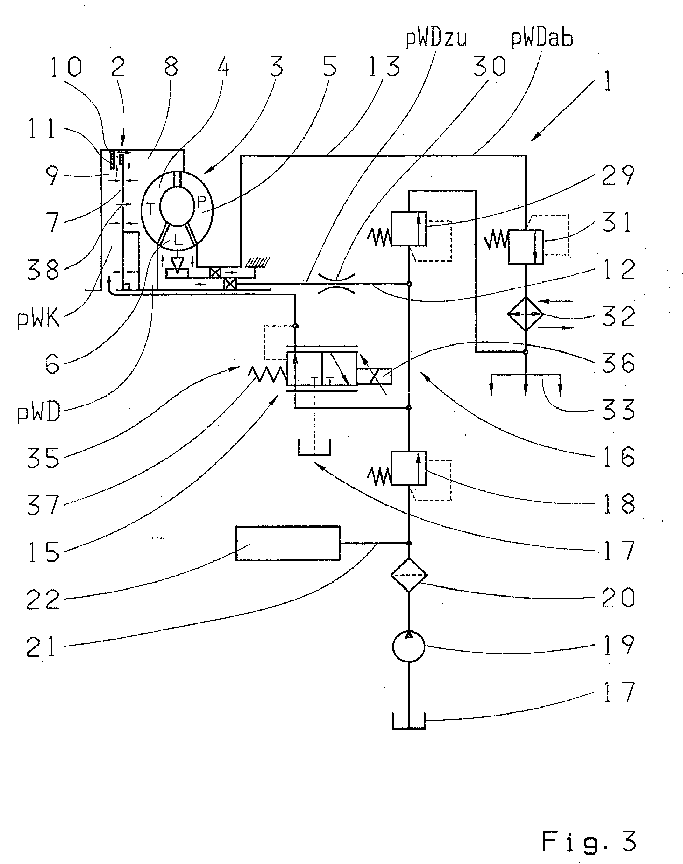

Fig. 3 zeigt ein zweites Ausführungsbeispiel der Vorrichtung 1 in einer Fig. 1 entsprechenden Darstellung, wobei sich die Vorrichtung 1 gemäß Fig. 3 im Wesentlichen lediglich im Bereich der Einrichtung 15 vom ersten Ausführungsbeispiel der Vorrichtung 1 gemäß Fig. 1 und Fig. 2 unterscheidet. Aus diesem Grund wird in der nachfolgenden Beschreibung auf die Unterschiede zwischen den beiden Ausführungsbeispielen der Vorrichtung 1 näher eingegangen und bezüglich der weiteren Funktionsweise der Vorrichtung 1 gemäß Fig. 3 auf die vorstehende Beschreibung verwiesen.

Bei der Vorrichtung 1 gemäß Fig. 3 umfasst die Einrichtung 15 anstatt der Schaltventileinrichtung 14 eine als Druckminderventil ausgebildete Regelventileinrichtung 35, die zwischen dem druckführenden Bereich 16 und dem Kolbenraum 9 und zwischen dem drucklosen Bereich 17 und dem Kolbenraum 9 vorgesehen ist. Die Regelventileinrichtung 35 ist mit einem Proportionalmagneten 36 und einer Federeinrichtung 37 ausgeführt, wobei in der in Fig. 3 dargestellten ersten Endstellung der Regelventileinrichtung 35 der Kolbenraum 9 vollständig mit dem druckführenden Bereich 16 verbunden ist und die Wandlerüberbrückungskupplung 2 in vollständig geöffnetem Betriebszustand vorliegt.

Der Kolben 7 der Wandlerüberbrückungskupplung 2 ist vorliegend mit einer im Kolbenraum 9 mit dem Wandlerinnenraum 8 verbindenden Drosseleinrichtung 38 ausgebildet, da die Regelventileinrichtung 35 mit positiver Überdeckung ausgeführt ist. Ist die Regelventileinrichtung mit negativer Überdeckung ausgebildet, ist die Drosseleinrichtung im Bereich des Kolbens der Wandlerüberbrückungskupplung für eine drehmomentmodulierte Schaltung der Wandlerüberbrückungskupplung nicht erforderlich.

Da der Druck pWK im Kolbenraum 9 bei geöffneter Wandlerüberbrückungskupplung 2 größer ist als der Druck pWD im Wandlerinnenraum 8, wird der Wandlerinnenraum 8 sowohl über die erste Leitung 12 als auch ausgehend vom Kolbenraum 9 über die Reibbeläge 10 und 11 sowie über die Drosseleinrichtung 38 mit Hydraulikfluid beaufschlagt.

Bei Vorliegen einer entsprechenden Anforderung zum Schließen der Wandlerüberbrückungskupplung 2 wird die Regelventileinrichtung 35 bzw. der Proportionalmagnet 36 derart bestromt, dass der Kolbenraum 9 kurzzeitig über die Regelventileinrichtung 35 mit dem drucklosen Bereich 17 verbunden wird. Der Kolben 7 legt sich dadurch schnell mit seinem Reibbelag 10 am Reibbelag 11 an, womit der Hydraulikfluidvolumenstrom aus dem Kolbenraum 9 zwischen den Reibbelägen 10 und 11 in Richtung des Wandlerinnenraums 8 unterbrochen wird.

Um einen sprungartigen Anstieg der Übertragungsfähigkeit der Wandlerüberbrückungskupplung 2 zu vermeiden, wird der Kolbenraum 9 über die Regelventileinheit 35 geregelt mit einem Druck ausgehend vom druckführenden Bereich 16 beaufschlagt. Der Ölfluss durch die Drosseleinrichtung 38 des Kolben 7 wird dazu benutzt, um den Druck pWK im Kolbenraum 9 langsam abzusenken und eine drehmomentmodulierte Schaltung der Wandlerüberbrückungskupplung 2 ausgehend von ihrem geöffneten Betriebszustand in Richtung ihres vollständig geschlossenen Betriebszustandes durchzuführen und einen hohen Fahrkomfort gewährleisten zu können.

### Bezugszeichen

- 1: Vorrichtung
- 2: Wandlerüberbrückungskupplung
- 3: hydrodynamischer Drehmomentwandler
- 4: Turbinenrad
- 5: Pumpenrad
- 6: Leitrad
- 7: Kolben
- 8: Wandlerinnenraum
- 9: Kolbenraum
- 10: Reibbelag
- 11: Reibbelag
- 12: erste Leitung
- 13: zweite Leitung
- 14: Schaltventileinrichtung
- 15: Einrichtung
- 16: druckführender Bereich
- 17: druckloser Bereich, Tank
- 18: Folgeventil, Druckbegrenzungsventil
- 19: Druckmittelquelle, Hydraulikpumpe
- 20: Filterelement
- 21: Leitung
- 22: Primärdruckkreislauf
- 23: Digitalmagnet
- 24: Federeinrichtung
- 25: Druckmittelspeicher
- 26: Kolbenelement
- 27: Federeinrichtung
- 28: Fläche
- 29: Folgeventil, weiteres Druckbegrenzungsventil
- 30: Drosseleinrichtung
- 31: Zusätzliches Folgeventil, Druckbegrenzungsventil
- 32: Kühlereinrichtung
- 33: Schmierdruckkreislauf
- 34: Drosseleinrichtung
- 35: Regelventileinrichtung
- 36: Proportionalmagnet
- 37: Federeinrichtung
- 38: Drosseleinrichtung
- pWK: Druck im Kolbenraum
- pWD: Wirksamer Druck im Wandlerinnenraum
- pWDzu: Zulaufdruck des Drehmomentwandlers
- pWDab: Ablaufdruck des Drehmomentwandlers

## Patentansprüche

1. Vorrichtung (1) zum Betätigen einer reibschlüssigen Wandlerüberbrückungskupplung (2) eines hydrodynamischen Drehmomentwandlers (3), wobei ein Kolben (7) der Wandlerüberbrückungskupplung (2) mit einem in Schließrichtung der Wandlerüberbrückungskupplung (2) wirkenden Druck (pWD) eines Wandlerinnenraums (8) und mit einem in Öffnungsrichtung wirkenden Druck (pWK) eines vom Kolben (7) begrenzten Kolbenraumes (9) beaufschlagbar ist und der Kolbenraum (9) zumindest in geöffnetem Betriebszustand der Wandlerüberbrückungskupplung (2) mit dem Wandlerinnenraum (8) verbunden ist, und wobei der Wandlerinnenraum (8) über eine erste Leitung (12) mit Hydraulikfluid beaufschlagbar ist und über eine zweite Leitung (13) Hydraulikfluid aus dem Wandlerinnenraum (8) abführbar ist sowie der Kolbenraum (9) der Wandlerüberbrückungskupplung (2) mit einem druckführenden Bereich (16) und mit einem im Wesentlichen drucklosen Bereich (17) verbindbar ist, **dadurch gekennzeichnet, dass** eine Einrichtung (15) vorgesehen ist, über die eine Übertragungsfähigkeit der Wandlerüberbrückungskupplung (2) durch Variieren des Drucks (pWK) im Kolbenraum (9) modulierbar ist und wobei die Einrichtung (15) eine zwischen dem druckführenden Bereich (16) und dem Kolbenraum (9) und zwischen dem drucklosen Bereich (17) und dem Kolbenraum (9) angeordnete Regelventileinrichtung (35) umfasst, wobei der Kolbenraum (9) über die Regelventileinrichtung (35) mit dem druckführenden Bereich (16) und mit dem drucklosen Bereich (17) in Wirkverbindung bringbar ist und wobei die Einrichtung (15) eine den Kolbenraum (9) und den Wandlerinnenraum (8) verbindende Drosseleinrichtung (38) umfasst.

2. Vorrichtung nach Anspruch 1, **dadurch gekennzeichnet, dass** der Druck des druckführenden Bereiches (16) in Abhängigkeit eines Folgeventiles (18) steht, das stromab einer Druckmittelquelle(19), vorzugsweise einer Hydraulikpumpe, vorgesehen ist.

3. Vorrichtung nach Anspruch 2, **dadurch gekennzeichnet, dass** stromab der Druckmittelquelle (19) und stromauf des Folgeventiles (18) ein Primärdruckkreislauf (22) einer Getriebeeinrichtung mit Hydraulikfluid von der Druckmittelquelle (19) beaufschlagbar ist.

4. Vorrichtung nach Anspruch 2 oder 3, **dadurch gekennzeichnet, dass** stromab des Folgeventils (18) ein weiteres Folgeventil (29) vorgesehen ist, mittels dem vorzugsweise ein Schmierdruckkreislauf (33) mit dem druckführenden Bereich (16) oberhalb eines definierten Druckniveaus stromauf des weiteren Folgeventils (29) verbindbar ist.

5. Vorrichtung nach einem der Ansprüche 1 bis 4, **dadurch gekennzeichnet, dass** zwischen dem druckführenden Bereich (16) und dem Wandlerinnenraum (8) eine Drosseleinrichtung (30) vorgesehen ist.

6. Vorrichtung nach einem der Ansprüche 1 bis 5, **dadurch gekennzeichnet, dass** stromab des Wandlerinnenraums (8) in der zweiten Leitung (13) ein zusätzliches Folgeventil (31) vorgesehen ist, über das oberhalb eines definierten Druckniveaus stromauf des zusätzlichen Folgeventils (31) vorzugsweise eine Kühlereinrichtung (32) mit Hydraulikfluid beaufschlagbar ist.

7. Vorrichtung nach Anspruch 6, **dadurch gekennzeichnet, dass** das der Schmierdruckkreislauf (33) stromab der Kühlereinrichtung (32) angeordnet ist und der druckführende Bereich (16) über das weitere Folgeventil (29) stromab der Kühlereinrichtung (32) und stromauf des Schmierdruckkreislaufes (33) mit dem Schmierdruckkreislauf (33) in Wirkverbindung bringbar ist.

## Claims

1. Device (1) for actuating a frictionally acting converter lock-up clutch (2) of a hydrodynamic torque converter (3), wherein a piston (7) of the converter lock-up clutch (2) can be acted on with a pressure (pWD), which acts in the closing direction of the converter lock-up clutch (2), of a converter interior (8) and with a pressure (pWK), which acts in the opening direction, of a piston chamber (9) which is delimited by the piston (7), and the piston chamber (9) is connected to the converter interior (8) at least in the open operating state of the converter lock-up clutch (2), and wherein the converter interior (8) can be charged with hydraulic fluid via a first line (12), and hydraulic fluid can be discharged from the converter interior (8) via a second line (13), and the piston chamber (9) of the converter lock-up clutch (2) is connectable to a pressure-conducting region (16) and to a substantially unpressurized region (17), **characterized in that** a device (15) is provided by means of which a transmission capability of the converter lock-up clutch (2) can be modulated through variation of the pressure (pWK) in the piston chamber (9), and wherein the device (15) comprises a regulating valve device (35) which is arranged between the pressure-conducting region (16) and the piston chamber (9) and between the unpressurized region (17) and the piston chamber (9), wherein the piston chamber (9) can be operatively connected by way of the regulating valve device (35) to the pressure-conducting region (16) and to the unpressurized region (17), and wherein the device (15) comprises a throttle device (38) which connects the piston chamber (9) and the converter interior (8).

2. Device according to Claim 1, **characterized in that** the pressure of the pressure-conducting region (16) is dependent on a sequence valve (18) which is provided downstream of a pressure medium source (19), preferably downstream of a hydraulic pump.

3. Device according to Claim 2, **characterized in that**, downstream of the pressure medium source (19) and upstream of the sequence valve (18), a primary pressure circuit (22) of a transmission device can be charged with hydraulic fluid from the pressure medium source (19).

4. Device according to Claim 2 or 3, **characterized in that**, downstream of the sequence valve (18), there is provided a further sequence valve (29) by means of which, preferably, a lubrication pressure circuit (33) can be connected to the pressure-conducting region (16) when a pressure upstream of the further sequence valve (29) is above a defined pressure level.

5. Device according to one of Claims 1 to 4, **characterized in that** a throttle device (30) is provided between the pressure-conducting region (16) and the converter interior (8).

6. Device according to one of Claims 1 to 5, **characterized in that**, downstream of the converter interior (8), in the second line (13), there is provided an additional sequence valve (31) by means of which, preferably, a cooling device (32) can be charged with hydraulic fluid when a pressure upstream of the additional sequence valve (31) is above a defined pressure level.

7. Device according to Claim 6, **characterized in that** the lubrication pressure circuit (33) is arranged downstream of the cooler device (32), and the pressure-conducting region (16) can, by means of the further sequence valve (29), be operatively connected to the lubrication pressure circuit (33) downstream of the cooler device (32) and upstream of the lubrication pressure circuit (33).

## Revendications

1. Dispositif (1) permettant d'actionner un embrayage de prise directe à convertisseur entraîné par friction (2) d'un convertisseur de couple hydrodynamique (3), un piston (7) de l'embrayage de prise directe à convertisseur (2) pouvant être sollicité par une pression (pWD) d'un espace interne de convertisseur (8) agissant dans le sens de fermeture de l'embrayage de prise directe à convertisseur (2) et par une pression (pWK) d'un espace de piston (9) limité par le piston (7) agissant dans le sens de l'ouverture, et l'espace de piston (9), au moins dans l'état de fonctionnement ouvert de l'embrayage de prise directe à convertisseur (2), étant connecté à l'espace interne de convertisseur (8), et l'espace interne de convertisseur (8) pouvant être sollicité par le biais d'une première conduite (12) avec du fluide hydraulique et du fluide hydraulique pouvant être évacué de l'espace interne de convertisseur (8) par le biais d'une deuxième conduite (13) et l'espace de piston (9) de l'embrayage de prise directe à convertisseur (2) pouvant être connecté à une région conduisant la pression (16) et à une région (17) essentiellement sans pression, **caractérisé en ce qu'**un dispositif (15) est prévu, par le biais duquel une capacité de transmission de l'embrayage de prise directe à convertisseur (2) peut être modulée par variation de la pression (pWK) dans l'espace de piston (9), et le dispositif (15) comprenant un dispositif de soupape de régulation (35) disposé entre la région conduisant la pression (16) et l'espace de piston (9) et entre la région sans pression (17) et l'espace de piston (9), l'espace de piston (9) pouvant être amené en liaison fonctionnelle par le biais du dispositif de soupape de régulation (35) avec la région conduisant la pression (16) et avec la région sans pression (17) et le dispositif (15) comprenant un dispositif d'étranglement (38) reliant l'espace de piston (9) et l'espace interne de convertisseur (8).

2. Dispositif selon la revendication 1, **caractérisé en ce que** la pression de la région conduisant la pression (16) dépend d'une soupape suiveuse (18) qui est prévue en aval d'une source de fluide sous pression (19), de préférence une pompe hydraulique.

3. Dispositif selon la revendication 2, **caractérisé en ce qu'**en aval de la source de fluide sous pression (19) et en amont de la soupape suiveuse (18), un circuit de pression primaire (22) d'un dispositif de transmission peut être sollicité avec du fluide hydraulique provenant de la source de fluide sous pression (19).

4. Dispositif selon la revendication 2 ou 3, **caractérisé en ce qu'**en aval de la soupape suiveuse (18) est prévue une soupape suiveuse supplémentaire (29), au moyen de laquelle de préférence un circuit de pression de lubrification (33) peut être connecté à la région conduisant la pression (16) en amont de la soupape suiveuse supplémentaire (29) au-dessus d'un niveau de pression défini.

5. Dispositif selon l'une quelconque des revendications 1 à 4, **caractérisé en ce qu'**entre la région conduisant la pression (16) et l'espace interne de convertisseur (8) est prévu un dispositif d'étranglement (30).

6. Dispositif selon l'une quelconque des revendications 1 à 5, **caractérisé en ce qu'**en aval de l'espace interne de convertisseur (8), dans la deuxième conduite (13), est prévue une soupape suiveuse supplémentaire (31), par le biais de laquelle au-dessus d'un niveau de pression défini, en amont de la soupape suiveuse supplémentaire (31), de préférence un dispositif de radiateur (32) peut être sollicité avec du fluide hydraulique.

7. Dispositif selon la revendication 6, **caractérisé en ce que** le circuit de pression de lubrification (33) est disposé en aval du dispositif de radiateur (32) et la région conduisant la pression (16) peut être amenée en liaison fonctionnelle par le biais de la soupape suiveuse supplémentaire (29) en aval du dispositif de radiateur (32) et en amont du circuit de pression de lubrification (33) avec le circuit de pression de lubrification (33).
